# FASCICULE DE BREVET EUROPEEN

(11) **EP 0 336 793 B1**
(45) Date de publication et mention de la délivrance du brevet: **13.01.1993**
(21) Numéro de dépôt: 89400651.9
(22) Date de dépôt: 08.03.1989
(51) Int. Cl.: G01B 11/24

(54) **Dispositif de repérage d'un objet, utilisant un balayage de celui-ci par un faisceau lumineux**
Vorrichtung zur Ortung eines Objektes durch Abtasten des Objektes mit einem Lichtstrahl
An object identification device using a scan of said object with a light beam

(30) Priorité: 09.03.1988 FR 8803045
(43) Date de publication de la demande: 11.10.1989
(73) Titulaire: COMMISSARIAT A L'ENERGIE ATOMIQUE, 75015 Paris Cédex 15 (FR)
(72) Inventeur: Merard, René, F-91430 Igny (FR)
(74) Mandataire: Mongrédien, André

(56) Documents cités:
- EP-A- 0 009 582
- EP-A- 0 063 761
- EP-A- 0 232 771
- DE-A- 2 423 340
- DE-A- 3 601 442
- FR-A- 1 279 290
- US-A- 3 589 815

## Description

La présente invention concerne un dispositif de repérage d'un objet, utilisant un balayage de celui-ci par un faisceau lumineux. Elle s'applique notamment à la détermination de profils d'objets comportant une ou plusieurs surfaces courbes et en particulier gauches, par exemple de pièces utilisées pour la construction de véhicules automobiles, d'engins ferroviaires ou d'aéronefs, et en particulier au contrôle du galbe de glaces destinées à des véhicules automobiles.

Les techniques de construction automobile, ferroviaire, aéronautique ou autre, font de plus en plus appel à des surfaces gauches pour augmenter la rigidité des structures construites, qu'elles soient métalliques ou non, afin de pouvoir diminuer la masse de ces structures. Cette utilisation accrue de surfaces gauches résulte également du fait que les constructeurs de véhicules automobiles par exemple, se soucient de plus en plus de la réalisation de profils aérodynamiques.

Dans le domaine du contrôle de fabrication de pièces ayant des formes gauches, se pose le problème de l'augmentation de la vitesse de mesure, afin de réduire les coûts de production.

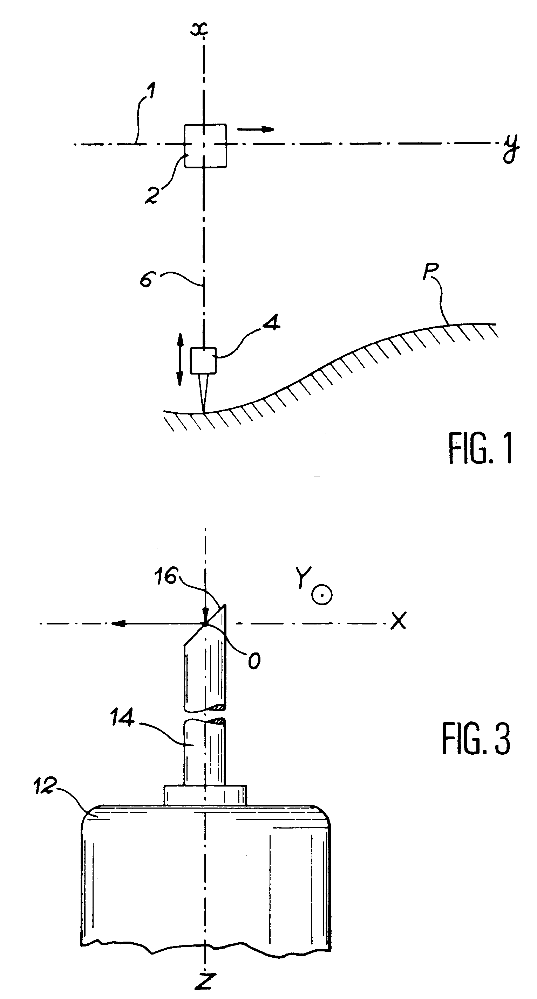

Dans ce domaine, on connaît déjà des techniques utilisant des pointages optiques par "méthode de zéro". Un exemple de ces techniques est illustré schématiquement sur la figure 1 et utilise un appareil de mesure disposé sur un banc horizontal de mesure 1. Cet appareil comprend un dispositif optique 2 mobile en translation sur le banc de mesure suivant un axe y, ainsi qu'une tête de mesure 4 fixée à une extrémité d'une tige verticale 6 qui est mobile par rapport au dispositif 2 de sorte que la tête de mesure 4 est déplaçable en translation suivant une direction x verticale.

La tête de mesure 4 comporte une source (non représentée) de lumière qui est focalisée et cette tête de mesure 4 fournit un signal d'erreur positif ou négatif selon que l'objet à contrôler P (qui est fixe ) est situé en-delà ou en-deçà du point focal de la source de lumière focalisée. Il est ainsi possible d'asservir la tête de mesure suivant la direction x afin que le signal d'erreur soit nul. Cette tête de mesure peut ainsi "suivre" le profil de l'objet P, ce qui permet de contrôler la forme de ce dernier.

Ces techniques connues de contrôle, pour précises qu'elles soient, ne sont pas rapides.

La présente invention a pour but de remédier à cet inconvénient en proposant un dispositif permettant la détermination de profils d'objets plus rapidement que les appareils dont un exemple est représenté sur la figure 1, et plus généralement, un dispositif de repérage rapide d'un objet.

A cet effet, la présente invention utilise un balayage particulier de cet objet par un faisceau lumineux.

De façon précise, la présente invention concerne un dispositif de repérage d'un objet, caractérisé en ce qu'il comprend :
- une source de lumière apte à émettre un faisceau lumineux étroit,
- des moyens de déplacement de ce faisceau étroit, ces moyens de déplacement du faisceau comprenant :
   . des moyens de rotation du faisceau lumineux dans un plan de coupe de l'objet, autour d'un point d'un axe de détection contenu dans le plan de coupe, le faisceau passant par ce point de l'axe de détection, et
   . au moins un miroir fixe de renvoi du faisceau en rotation, ce miroir rencontrant le plan de coupe et étant disposé hors de l'axe et prévu pour permettre le déplacement du faisceau réfléchi par lui, dans le plan de coupe, obliquement par rapport à l'axe de détection, pour permettre le balayage de l'objet par ce faisceau réfléchi, dans le plan de coupe,
- des moyens de photodétection aptes à détecter une lumière se propageant suivant l'axe de détection et issue d'un point de l'objet, situé dans ledit plan et correspondant à une position déterminée du faisceau balayant l'objet, cette position étant liée de façon biunivoque à la distance entre le point de l'objet et les moyens de photodétection, ces derniers étant aptes à engendrer un signal à l'instant de la détection, et
- des moyens de traitement de ce signal, permettant le repérage du point de l'objet à l'aide de cet instant.

Certes, on connaît déjà, par le document US-A-3589815, une sonde de mesure sans contact, permettant de mesurer la distance entre une surface réflectrice et une référence prédéterminée, et comprenant, entre autres, à cet effet : une source lumineuse, une lentille définissant un axe de mesure parallèle au faisceau issu de la source, des moyens optiques prévus pour incliner ce faisceau et le focaliser en un point situé sur l'axe de mesure et un chariot oscillant qui porte les moyens optiques et qui est prévu pour déplacer ce point parallèlement à l'axe du faisceau, sur l'axe de mesure. Cependant, cette sonde de mesure connue a, du fait qu'elle utilise un chariot oscillant, une amplitude de balayage et donc un champ de mesure de distance très limités, ce qui n'est pas le cas du dispositif objet de la présente invention, qui utilise un faisceau de balayage engendré par un faisceau rotatif réfléchi par au moins un miroir fixe.

On connaît aussi, par le document EP-A-0 232 771, un dispositif d'exploration optique comprenant une roue à miroirs ainsi qu'un miroir concave.

De préférence, pour des questions de commodité de réalisation, dans le dispositif objet de la présente invention, le miroir permet le déplacement du faisceau réfléchi, parallèlement à une direction fixe du plan de coupe, cette direction faisant un angle non nul avec l'axe de détection, le miroir étant en forme de cylindre parabolique dont la section droite, par un plan confondu avec le plan de coupe, est une parabole dont le foyer est confondu avec ledit point de l'axe de détection.

De préférence, le dispositif de l'invention comprend deux tels miroirs de renvoi en forme de cylindres paraboliques, ces miroirs de renvoi étant symétriques l'un de l'autre par rapport à un plan qui est perpendiculaire au plan de coupe et qui contient l'axe de détection, de façon que les moyens de photodétection engendrent successivement, au cours d'une même rotation complète du faisceau autour du point de l'axe de détection, deux signaux respectivement associés à deux positions de ce faisceau, ces positions correspondant à un même point de l'objet, et les moyens de traitement sont prévus pour repérer ce même point à l'aide du temps écoulé entre les instants de détection des deux signaux.

Dans ce cas, le repérage nécessite simplement de connaître le temps écoulé entre deux instants : l'exploitation de deux impulsions électriques correspondant respectivement aux deux miroirs de renvoi permet une mesure d'intervalle de temps, qui est beaucoup plus commode qu'une mesure d'un instant par rapport un instant de référence, ce qu'il faudrait faire si l'on utilisait un seul miroir de renvoi.

Selon un mode de réalisation particulier du dispositif objet de l'invention, les moyens de rotation du faisceau comprennent :
- des moyens de réflexion optique, et
- des moyens de rotation de ces moyens de réflexion, autour d'un axe de rotation qui est perpendiculaire au plan de coupe et qui passe par ledit point de l'axe de détection, ce point étant sur lesdits moyens de réflexion,
et ces moyens de réflexion sont prévus pour défléchir à 90° un faisceau lumineux tombant sur eux suivant l'axe de rotation.

Dans une réalisation avantageuse du dispositif objet de l'invention, permettant de réduire la taille de ce dispositif, les moyens de rotation des moyens de réflexion comprennent un moteur électrique ayant un arbre dont une extrémité est biseautée à 45° et optiquement réflectrice, de manière à constituer lesdits moyens de réflexion.

De préférence, afin de simplifier la réalisation du dispositif objet de l'invention, le faisceau en rotation passant par une première position dans laquelle il se propage suivant une première direction vers les moyens de photodétection, et par une seconde position dans laquelle il se propage suivant une seconde direction opposée à la première, ce dispositif comprend en outre des moyens d'arrêt de ce faisceau dans l'une des première et seconde positions.

La détection du passage du faisceau par l'autre de ces positions permet alors d'engendrer une impulsion de repérage apte à distinguer l'intervalle de temps utile à la mesure, de l'intervalle de temps complémentaire.

De préférence, la source de lumière utilisée dans l'invention comprend un laser, qui produit un faisceau lumineux étroit dont la divergence est extrêmement faible.

En vue d'utiliser le dispositif objet de l'invention notamment pour la détermination de profils d'objets, ce dispositif peut comprendre en outre des moyens de déplacement relatif de l'objet par rapport à ce dispositif, suivant une direction perpendiculaire à l'axe de détection et parallèle au plan de coupe.

Enfin, dans une réalisation particulière, permettant notamment la détermination de profils d'objets à plusieurs niveaux de ces objets, le dispositif de l'invention comprend en outre des moyens de déplacement relatif de l'objet par rapport à ce dispositif, suivant une direction perpendiculaire au plan de coupe.

La présente invention sera mieux comprise à la lecture de la description qui suit, d'exemples de réalisation donnés à titre purement indicatif et nullement limitatif en référence aux dessins annexés sur lesquels :
- la figure 1 est une vue schématique d'un appareil connu permettant la détermination de profils d'objets, et a déjà été décrite,
- la figure 2 est une vue schématique et partielle d'un mode de réalisation particulier du dispositif objet de l'invention,
- la figure 3 illustre schématiquement des moyens de ce dispositif, permettant de faire tourner un faisceau lumineux dans un plan,
- la figure 4 illustre schématiquement le principe d'un comptage électronique utilisé dans ce dispositif,
- la figure 5 illustre schématiquement une façon d'étalonner le dispositif représenté sur la figure 2,
- la figure 6 est une vue schématique de ce dispositif, et
- la figure 7 est un schéma représentatif des moyens de traitement du signal de détection engendré dans ce dispositif.

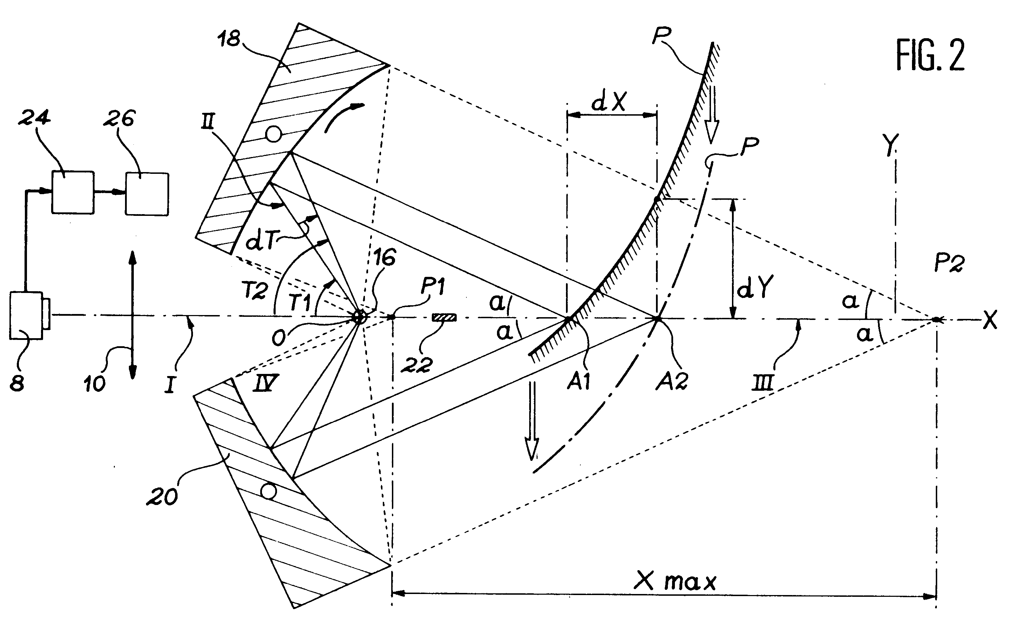

Le mode de réalisation particulier du dispositif objet de l'invention, qui est représenté schématiquement et partiellement sur la figure 2, est par exemple destiné à la détermination du profil d'un objet P.

Le dispositif représenté sur la figure 2 comprend une source de lumière (non représentée sur cette figure 2) et la surface de l'objet P, que l'on souhaite examiner au moyen de ce dispositif, est supposée capable de diffuser cette lumière, la lumière diffusée occupant un certain angle solide, avec une fonction de distribution qui dépend, entre autres, de l'état de surface de l'objet.

Si la surface à examiner n'est pas suffisamment diffusante, on peut disposer sur cette surface, préalablement à l'examen de celle-ci, une matière adhésive détachable et optiquement diffusante, que l'on enlève après l'examen de la surface.

Le dispositif schématiquement représenté sur la figure 2 comprend aussi des moyens de photodétection tels qu'un photodétecteur 8 capable d'engendrer un signal électrique lorsqu'il reçoit une lumière se propageant suivant un axe X qui constitue un axe de détection de lumière.

En vue de déterminer son profil, l'objet P est déplacé suivant un axe Y perpendiculaire à l'axe X. En fait, seul compte un déplacement relatif de l'objet P par rapport au dispositif représenté sur la figure 2 : au lieu de déplacer l'objet P par rapport au dispositif maintenu fixe, on pourrait, au contraire, déplacer le dispositif suivant l'axe Y, devant l'objet P maintenu fixe.

Les axes X et Y définissent un plan d'examen et l'on voit en fait sur la figure 2 l'intersection de l'objet P et de ce plan d'examen qui est appelé par la suite "plan de coupe". Le dispositif permet ainsi l'examen de ladite intersection qui est une courbe dont l'équation peut être écrite dans le système d'axes X et Y.

En vue d'examiner l'objet à plusieurs niveaux, on peut également prévoir des déplacements relatifs de l'objet par rapport au dispositif, perpendiculairement au plan de coupe (le dispositif étant fixe et l'objet mobile ou, au contraire, l'objet étant fixe et le dispositif mobile).

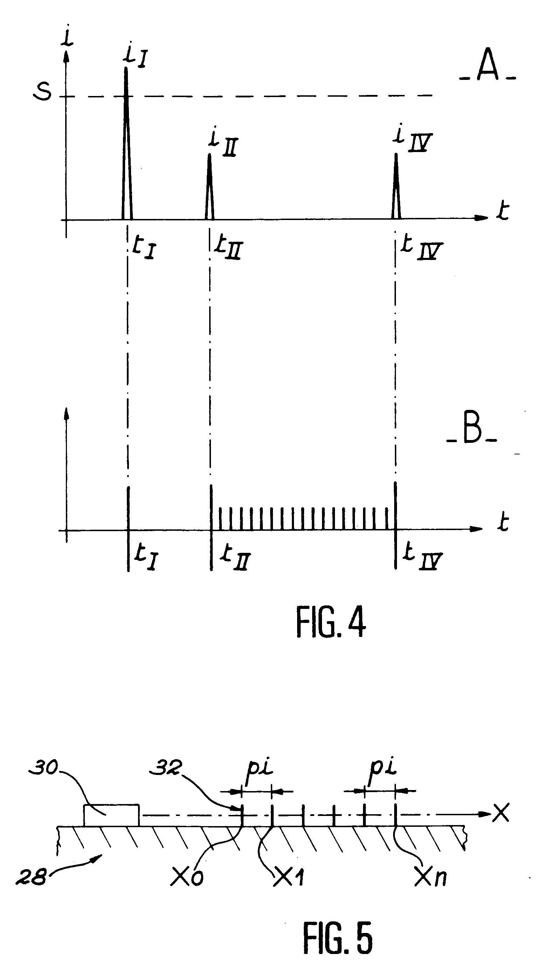

Le dispositif schématiquement représenté sur la figure 2 comprend également une optique 10 permettant de focaliser sur les moyens de photodétection 8 la lumière qui se propage en direction de ceux-ci, ainsi que des moyens permettant d'engendrer un faisceau lumineux tournant dans le plan de coupe. Ces derniers moyens sont schématiquement représentés sur la figure 3 et comprennent un moteur électrique 12 dont l'axe de rotation Z est perpendiculaire au plan de coupe et dont les moyens de commande ne sont pas représentés.

L'arbre 14 de ce moteur 12 est muni en son extrémité d'un miroir plan 16 qui forme un angle de 45° avec le plan de coupe. En vue de réduire l'encombrement du dispositif, l'arbre 14, supposé constitué d'un matériau optiquement réflecteur, par exemple un métal, est biseauté à 45° en cette extrémité de manière à obtenir le miroir 16 souhaité, faisant un angle de 45° avec le plan de coupe.

L'axe Z rencontre le miroir 16 en un point 0 et le moteur 12 est disposé de façon que ce point 0 soit également contenu dans le plan de coupe.

Ainsi, en envoyant un faisceau lumineux dirigé suivant l'axe Z, sur ce point 0, on obtient un faisceau réfléchi qui est dans le plan de coupe et, en faisant tourner l'arbre du moteur, ce faisceau réfléchi, qui passe par le point 0, tourne autour de ce dernier dans le plan de coupe.

Le dispositif représenté sur la figure 2 comprend également deux miroirs de renvoi identiques 18 et 20, en forme de cylindres paraboliques. Ces deux miroirs sont disposés de façon qu'ils soient symétriques l'un de l'autre par rapport au plan perpendiculaire au plan de coupe et contenant l'axe X, que les génératrices de ces miroirs soient perpendiculaires au plan de coupe et que le point 0 constitue, dans ce plan de coupe, le foyer de chacun des arcs de parabole résultant de l'intersection des miroirs de renvoi et dudit plan de coupe.

Sur la figure 2, on suppose que le faisceau tournant décrit en référence à la figure 3 se déplace dans le sens des aiguilles d'une montre. Lorsque ce faisceau tournant rencontre l'un des deux miroirs, par exemple le miroir 18, il est réfléchi par ce dernier suivant une direction fixe. Dans le dispositif représenté sur la figure 2, le miroir 18 est orienté de telle façon que cette direction fixe fasse un angle aigu a avec l'axe X.

La réflexion du faisceau tournant sur les miroirs 18 et 20 définit, sur l'axe X, un domaine de mesure de longueur Xmax, ce domaine étant délimité par deux points P1 et P2 de l'axe X. L'angle a est choisi en fonction du domaine de mesure recherché. A titre purement indicatif et nullement limitatif, le point P1 est à 10 cm du point 0 et Xmax vaut 40 cm.

A un instant donné, un point A1 de la pièce se trouve sur l'axe X. Lors d'une rotation complète du faisceau tournant dans le plan de coupe, les moyens de photodétection 8 reçoivent successivement quatre impulsions lumineuses :
- une première impulsion correspondant à une première position I du faisceau tournant, dans laquelle ce dernier tombe sur les moyens de photodétection 8 et forme un angle nul avec l'axe X,
- une seconde impulsion correspondant à une seconde position II du faisceau tournant, dans laquelle le faisceau réfléchi par le miroir 18 et correspondant à cette position II du faisceau tournant, tombe sur le point A1, le faisceau tournant formant alors un angle T1 avec l'axe X, le point A1 renvoyant suivant un certain angle solide la lumière qui l'atteint,
- une troisième impulsion correspondant à une troisième position III du faisceau tournant, formant un angle de 180° avec la première position I, et dans laquelle ce faisceau tombe directement sur le point A1, et
- une quatrième impulsion correspondant à une quatrième position IV du faisceau tournant, cette quatrième position étant symétrique de la seconde par rapport à l'axe X et correspondant à l'éclairement du point A1 par un faisceau résultant de la réflexion, sur le miroir de renvoi 20, du faisceau tournant dans cette quatrième position.

Le dispositif représenté sur la figure 2 comprend également un écran 22 prévu pour arrêter le faisceau tournant dans l'une de ses positions I et III. Cet écran est disposé sur l'axe X, à proximité du point 0, soit du côté de l'objet P, soit du côté de l'optique 10. La surface réceptrice des moyens de photodétection est suffisamment importante, notamment devant la surface de l'écran 22, pour recevoir les seconde et quatrième impulsions lumineuses.

Le dispositif représenté sur la figure 2 comprend aussi des moyens électroniques 24 de traitement des impulsions électriques engendrées par les moyens de photodétection 8 en réponse aux impulsions lumineuses incidentes. Ces moyens électroniques de traitement, qui seront décrits plus en détail par la suite, comprennent un compteur non représenté sur la figure 2 ainsi qu'une porte dite de comptage, également non représentée sur la figure 2, qui, lorsqu'elle est ouverte, permet au compteur de compter des impulsions électriques fournies par une horloge non représentée sur la figure 2 et faisant également partie des moyens électroniques de traitement 24.

Les impulsions lumineuses correspondant aux positions I et III du faisceau tournant ont des intensités qui sont très supérieures aux intensités des faisceaux correspondant aux positions II et IV du faisceau tournant.

Une seconde porte, dite de synchronisation, est ouverte lorsque les moyens de photodétection reçoivent une impulsion lumineuse dont l'intensité i dépasse un seuil S choisi de façon à être inférieur aux intensités lumineuses i_{I} et i_{III} des impulsions relatives aux positions I et III et supérieur à celles i_{II} et i_{IV} qui sont relatives aux positions II et IV. Par conséquent, les impulsions lumineuses relatives aux positions I et III sont toutes deux capables d'ouvrir ladite seconde porte. C'est pourquoi l'écran 22 est prévu dans le dispositif représenté sur la figure 2. Dans ce dispositif, cet écran est placé du côté de l'objet P.

Ainsi, lorsque l'impulsion lumineuse correspondant à la position I du faisceau tournant parvient aux moyens de photodétection, ladite seconde porte est ouverte, ceci ayant lieu à un instant t_{I} (figure 4-A); les impulsions d'horloge sont alors appliquées à l'entrée de la porte de comptage.

Les moyens électroniques de traitement 24 sont conçus pour que le compteur commence son comptage à un instant t_{II} en lequel le faisceau tournant est dans sa position II, les moyens de photodétection recevant alors l'impulsion lumineuse d'intensité i_{II}, et cesse de compter les impulsions électriques fournies par l'horloge à un instant t_{IV} correspondant à la position IV du faisceau tournant, pour laquelle les moyens de photodétection reçoivent l'impulsion lumineuse d'intensité i_{IV}.

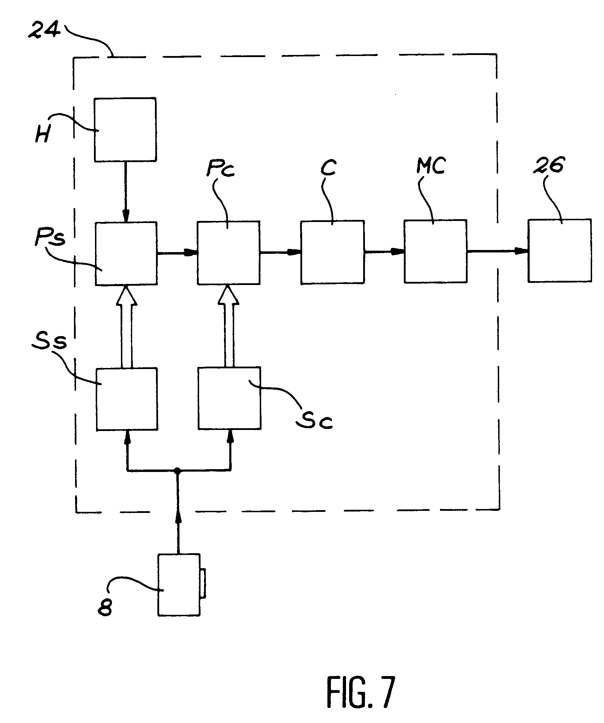

Le nombre N1 d'impulsions électriques compté entre les instants t_{II} et t_{IV} (figure 4-B) est mémorisé dans des moyens de mémorisation et de calcul MC (voir figure 7) faisant partie des moyens électroniques de traitement 24 et peut être affiché par des moyens d'affichage 26 qui sont associés à ces moyens électroniques de traitement. Le compteur est ensuite remis à zéro.

La vitesse angulaire w du moteur 12 est constante et le nombre d'impulsions électriques N1 compté entre les instants t_{II} et t_{IV}, qui est proportionnel à t_{IV} - t_{II}, est aussi proportionnel à l'angle balayé par le faisceau tournant entre ses positions II et IV.

Après un déplacement (relatif) de l'objet P, parallèlement à l'axe Y, par rapport au dispositif de la figure 2, déplacement au cours duquel l'objet P se déplace en direction de l'axe X d'une distance dY comptée sur l'axe Y, un point A2 de l'objet P se trouve sur l'axe X, à une distance dX (comptée sur l'axe X) de la position occupée précédemment sur cet axe X par le point A1.

Pour cette nouvelle position de l'objet P (point A2 sur l'axe X), une rotation complète du faisceau tournant conduit également à quatre positions de ce faisceau tournant, du genre de celles qui ont été décrites plus haut, et en particulier à la position notée II qui, pour le point A2 considéré, correspond à un angle T2 entre le faisceau tournant dans cette position II et l'axe X. Le comptage des impulsions électriques relatives au point A2 est également effectué et le nombre N2 d'impulsions électriques mémorisé et affiché, avec remise à zéro subséquente du compteur.

La quantité dX est fonction de la quantité dT égale à T2-T1 et donc fonction de la quantité dN égale à N2-N1, compte tenu de la vitesse angulaire constante w du moteur 12.

En amenant successivement en regard du dispositif différents points de l'objet P, et en mémorisant les nombres d'impulsions correspondant à ces différents points, il est possible de calculer les quantités dX qui en découlent et donc de déterminer le profil de l'objet P dans le plan de coupe considéré. Pour une telle détermination, les amplitudes dY des translations successives nécessaires de l'objet P parallèlement à l'axe Y pourraient, bien entendu, être toutes égales à une même valeur choisie par les utilisateurs.

Les quantités dX peuvent être déterminées de la façon suivante : préalablement à l'examen de l'objet P, on mémorise, en M, dans les moyens électroniques de traitement un tableau donnant les nombres d'impulsions mesurés pour différentes positions d'une cible réflectrice par rapport au dispositif.

Plus précisément, on place sur un banc de mesure 28 (figure 5) le dispositif représenté sur la figure 2 et portant la référence 30 sur la figure 5. On dispose sur le banc de mesure 28, en regard du dispositif 30, une cible plane et réflectrice 32 rencontrant l'axe de détection X de ce dispositif à une position arbitraire prise pour origine mais toutefois contenue dans le domaine de mesure mentionné plus haut, la cible étant perpendiculaire à X. On fait fonctionner le dispositif et l'on mémorise le nombre d'impulsions relatif à cette position d'abscisse nulle. On éloigne ensuite la cible 32 du dispositif, d'une distance pi, suivant l'axe X et l'on mémorise le nombre d'impulsions correspondant à cette nouvelle position de la cible (abscisse X1). Ces opérations sont répétées jusqu'à une position d'abscisse Xn (toujours comprise dans le domaine de mesure), ces différentes positions étant toutes séparées les unes des autres de la même quantité pi.

En se reportant à la figure 2, pour un objet P mesuré en différents points successifs tels que les points A1 et A2 de cette figure 2, auxquels correspondent respectivement les nombres d'impulsions électriques N1 et N2, les moyens électroniques de traitement calculent la quantité dN égale à la différence N2-N1, partir de laquelle ils déterminent la quantité dX mentionnée plus haut, par interpolation linaire au moyen du tableau mémorisé.

Bien entendu, pour chacun des points A1, A2 on peut effectuer plusieurs comptages, c'est-à-dire plusieurs déterminations successives du nombre d'impulsions électriques relatives à ce point, et utiliser la moyenne de ces comptages pour la détermination de la quantité dX, ce qui augmente la précision de la mesure.

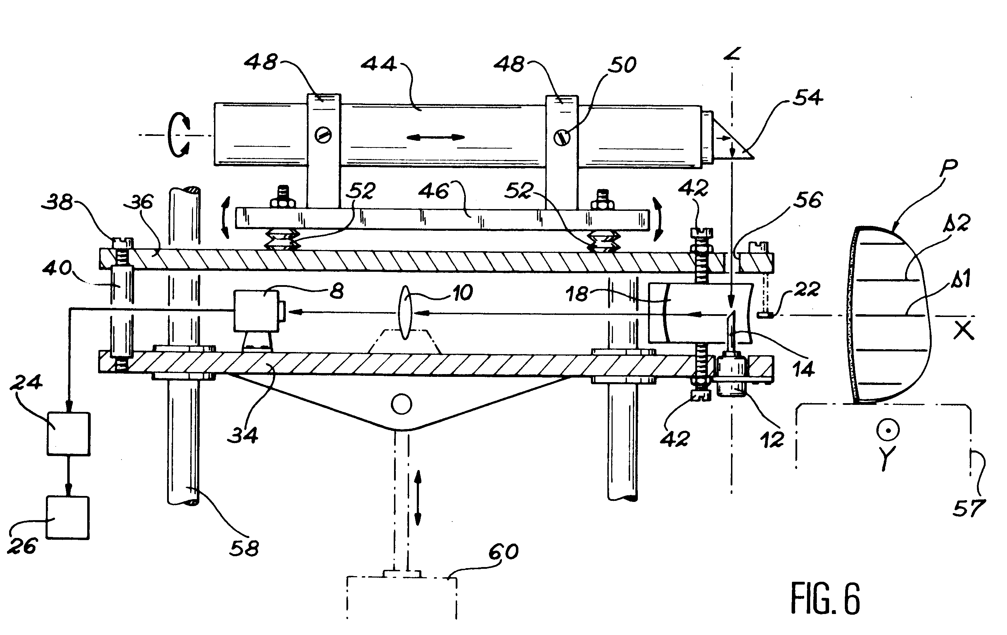

Sur la figure 6, on a représenté schématiquement le dispositif dont une partie est schématiquement représentée sur la figure 2. Ce dispositif est monté sur un support fixe, non représenté, et comprend une première plaque 34 qui porte les moyens de photodétection 8, l'optique 10 et le moteur 12, ainsi qu'une seconde plaque 36 qui est parallèle à la première plaque et fixée à celle-ci grâce à des vis 38, des entretoises appropriées 40, traversées par les vis 38, séparant les deux plaques. En outre, la seconde plaque 36 porte l'écran 22.

Les miroirs de renvoi 18 et 20, dont un seul est représenté sur la figure 6 et qui sont compris entre les plaques 34 et 36, sont fixés à ces plaques par des vis 42 munies de contre-écrous. Ces vis traversent lesdites plaques et pénètrent respectivement dans des faces opposées de blocs sur lesquels sont usinés les miroirs de renvoi.

Ces blocs sont par exemple en acier inoxydable et les miroirs de renvoi sont usinés sur ces blocs par exemple au moyen d'une fraiseuse à commande numérique, après quoi ces miroirs sont polis par des méthodes classiques.

Le dispositif représenté sur la figure 6 comprend également une source lumineuse 44 constituée par un laser, par exemple un laser He-Ne. Ce laser 44 est monté sur une plaque de positionnement 46, par l'intermédiaire de deux bagues 48 parallèles qui sont traversées par le laser 44 et fixées à la plaque 46. Des vis 50 sont prévues sur les bagues 48 pour l'immobilisation du laser, de sorte qu'en desserrant ces vis 50 il est possible de faire tourner et éventuellement de déplacer en translation le laser 44 dans les bagues 48 quand on souhaite faire un réglage de positionnement du faisceau émis par ce laser, les vis 50 étant ensuite resserrées.

La plaque 46 est fixée à la plaque 36 par l'intermédiaire de moyens 52 permettant un réglage en trois points du laser 44, ces moyens 52 comportant par exemple trois rondelles-ressorts classiques (dont seulement deux sont représentées sur la figure 6).

Des moyens 54 sont prévus pour dévier à 90° le faisceau directement issu de la face d'émission du laser 44. Ces moyens 54 consistent par exemple en un prisme déflecteur à 90° qui est collé sur la face d'émission du laser 44.

La plaque 36 est pourvue d'un perçage 56 permettant le passage du faisceau émis par le laser après qu'il ait été dévié à 90° par le prisme 54. L'axe de ce trou est l'axe Z. En agissant sur les moyens de réglage 52, en faisant tourner le laser dans les bagues 48 et en déplaçant éventuellement le laser dans ces bagues, on peut faire coïncider le faisceau issu du prisme 54 avec l'axe Z.

Par ailleurs, avant d'utiliser le dispositif représenté sur la figure 6, les miroirs de renvoi 18 et 20 sont réglés de la façon suivante : on choisit un point du domaine de mesure sélectionné sur l'axe X et l'on règle le miroir 18 de façon qu'il renvoie un faisceau laser incident (successivement dévié par le prisme 54 et par le miroir 16 formé sur l'arbre 14 du moteur 12) en direction de ce point choisi, après quoi on serre les vis 42 munies de contre-écrous et correspondant au miroir 18, pour immobiliser ce miroir dans la position obtenue, en repérant également l'angle que fait avec l'axe X le faisceau incident sur le miroir 18.

On règle ensuite le miroir 20 pour que le faisceau réfléchi par celui-ci et correspondant à un faisceau incident faisant le même angle avec l'axe X, tombe sur le point choisi sur l'axe X, après quoi les vis 42 munies de contre-écrous et relatives au miroir 20 sont également serrées pour immobiliser le miroir 20 entre les plaques 34 et 36.

Le dispositif représenté sur la figure 6 permet par exemple de déterminer le profil s1 d'objets P circulant devant le dispositif suivant l'axe Y, sur une chaîne de transfert 57.

On peut envisager un défilement pas à pas de chaque objet P devant le dispositif en vue d'examiner successivement différents points du profil s1.

En variante, on peut faire tourner périodiquement le moteur 12, chaque intervalle de temps pendant lequel il tourne correspondant à l'examen d'un point de l'objet (à savoir un comptage pour ce point, ou plusieurs comptages dont on fait la moyenne), cet objet défilant de façon continue devant le dispositif, en prévoyant une vitesse de défilement des objets suffisamment faible devant le produit de la vitesse angulaire de rotation w du moteur par la distance comprise entre l'axe Z et chaque objet examiné, afin de pouvoir négliger le déplacement de ce dernier lorsque le moteur tourne.

On peut également prévoir des moyens de déplacement en translation parallèlement à l'axe Z du dispositif, afin de pouvoir déterminer différents profils tels que s1, s2, correspondant à différents niveaux des objets suivant l'axe Z. Ces moyens de déplacement parallèlement à l'axe Z peuvent comprendre des colonnes 58 de guidage du dispositif parallèlement à l'axe Z ainsi qu'un vérin 60 dont les moyens de commande ne sont pas représentés sur la figure 6 et qui est prévu pour faire monter ou faire descendre le dispositif d'une hauteur voulue parallèlement à l'axe Z.

L'examen d'un objet suivant les axes Y et Z, contenus dans un plan horizontal par exemple, peut être fait de la façon suivante : le dispositif optique se déplace suivant l'axe Y, en balayant l'objet suivant une ligne Yo puis se déplace suivant l'axe Z d'une quantité DZ et à nouveau le dispositif optique balaye l'objet suivant une ligne Y1 ... etc...

Une autre utilisation du dispositif peut consister en un contrôle d'un ou plusieurs objets au moyen d'un objet-témoin : ce dernier est d'abord examiné à un niveau ou plusieurs niveaux, avec un examen de points déterminés à chaque niveau, à savoir, pour chacun de ces points, un comptage (ou plusieurs comptages dont on fait la moyenne). Ensuite, chaque objet est contrôlé au(x) même(s) niveau(x) en examinant, pour chaque niveau, les points homologues de ceux de l'objet-témoin qui ont été préalablement examinés. Il suffit alors de comparer les comptages relatifs à l'objet-témoin et bien entendu mémorisés, aux comptages relatifs à chacun des objets et également mémorisés, sans qu'il soit nécessaire de calculer les quantités dX mentionnées plus haut, pour décider si un objet est acceptable ou non suivant que chaque comptage relatif à ce dernier se trouve ou ne se trouve pas dans un intervalle centré sur le comptage homologue de l'objet-témoin.

On peut bien entendu prévoir des moyens non représentés permettant de séparer les objets acceptables des objets non acceptables.

Une autre utilisation possible du dispositif peut être la détermination de la distance d'un objet à ce dispositif : on effectue d'abord le ou les comptages Nt relatifs à un objet-témoin disposé à une distance déterminée D du dispositif maintenu fixe. On effectue ensuite le ou les comptages homologues N relatifs à l'objet dont on veut déterminer la distance d au dispositif. Le calcul de la différence N-Nt permet ensuite de calculer la quantité dX égale à d-D, d'où la distance d.

Enfin, le dispositif peut être utilisé pour savoir si un objet s'est déplacé au cours du temps : à un instant donné, on effectue, au moyen du dispositif maintenu fixe devant l'objet, le ou les comptages N1 relatifs à un ou plusieurs points de cet objet et à un instant ultérieur (qui peut être séparé du premier de plusieurs minutes ou plusieurs heures,...) on effectue le ou les comptages homologues N2. La ou les différences entre les comptages N1 et N2 permet de calculer la ou les quantités dX correspondantes qui peuvent être positives, négatives ou nulles, en fonction de quoi on saura si l'objet s'est déplacé vers le dispositif, ou s'est éloigné de ce dernier ou n'a pas bougé par rapport à ce dispositif.

La figure 7 représente les moyens électroniques de traitement 24 réunis aux moyens de photodétection 8. Ils comportent :
- la seconde porte dite de synchronisation, Ps, intercalée entre le détecteur 8 et une horloge H, et commandée par un circuit à seuil Ss qui sélectionne les seules impulsions i_{I} ; cette porte s'ouvre donc à l'instant t_{I} ;
- la première porte, dite de comptage, Pc, alimentée par la sortie de la porte Ps et commandée par un deuxième circuit à seuil Sc : la première impulsion issue de Sc ouvre la porte Pc lors de la détection de l'impulsion lumineuse i_{II} donc à l'instant t_{II} ; la deuxième impulsion issue de Sc ferme cette porte Pc lors de la détection de l'impulsion lumineuse I_{IV} donc à l'instant t_{IV} ;
- le compteur C dont le contenu N constitue une mesure de la distance X.

Dans une variante de réalisation non représentée, le moteur électrique permettant la rotation des moyens de réflexion du faisceau issu de la source lumineuse est un moteur pas à pas commandé par une horloge rapide dont les impulsions sont également utilisées pour mesurer des intervalles de temps du type t_{IV}-t_{II} (voir plus haut), ou plus précisément pour déterminer le nombre d'impulsions compris entre les instants t_{II} et t_{IV}. On asservit ainsi la rotation à la fréquence de mesure et par conséquent on élimine les erreurs de mesure correspondantes.

## Revendications

1. Dispositif de repérage d'un objet (P),comprenant :
- une source de lumière (44) apte à émettre un faisceau lumineux étroit,
- des moyens (12, 16, 18, 20) de déplacement de ce faisceau étroit, ces moyens de déplacement du faisceau comprenant :
. des moyens (12, 16) de rotation du faisceau lumineux dans un plan de coupe de l'objet, autour d'un point (0) d'un axe de détection (X) contenu dans le plan de coupe, le faisceau passant par ce point de l'axe de détection, et
. au moins un miroir (18, 20) fixe de renvoi du faisceau en rotation, ce miroir rencontrant le plan de coupe et étant disposé hors de l'axe et prévu pour permettre le déplacement du faisceau réfléchi par lui, dans le plan de coupe, obliquement par rapport à l'axe de détection (X), et pour permettre le balayage de l'objet par ce faisceau réfléchi, dans le plan de coupe,
- des moyens (8) de photodétection aptes à détecter une lumière se propageant suivant l'axe de détection et issue d'un point de l'objet, situé dans ledit plan et correspondant à une position déterminée du faisceau balayant l'objet, cette position étant liée de façon biunivoque à la distance entre le point de l'objet et les moyens de photodétection, ces derniers étant aptes à engendrer un signal à l'instant de la détection, et
- des moyens (24) de traitement de ce signal, permettant le repérage du point de l'objet à l'aide de cet instant.

2. Dispositif selon la revendication 1, caractérisé en ce que le miroir (18, 20) permet le déplacement du faisceau réfléchi, parallèlement à une direction fixe du plan de coupe, cette direction faisant un angle (a) non nul avec l'axe (X) de détection, le miroir étant en forme de cylindre parabolique dont la section droite, par un plan confondu avec le plan de coupe, est une parabole dont le foyer est confondu avec ledit point de l'axe de détection.

3. Dispositif selon la revendication 2, caractérisé en ce qu'il comprend deux tels miroirs de renvoi (18, 20) en forme de cylindres paraboliques, ces miroirs de renvoi étant symétriques l'un de l'autre par rapport à un plan qui est perpendiculaire au plan de coupe et qui contient l'axe de détection (X), de façon que les moyens de photodétection (8) engendrent successivement, au cours d'une même rotation complète du faisceau autour du point (0) de l'axe de détection (X), deux signaux respectivement associés à deux positions de ce faisceau, ces positions correspondant à un même point de l'objet (P), et en ce que les moyens de traitement (24) sont prévus pour repérer ce même point à l'aide du temps écoulé entre les instants de détection des deux signaux.

4. Dispositif selon l'une quelconque des revendications 1 à 4, caractérisé en ce que les moyens de rotation du faisceau comprennent :
- des moyens de réflexion optique (16), et
- des moyens (12) de rotation de ces moyens de réflexion, autour d'un axe de rotation (Z) qui est perpendiculaire au plan de coupe et qui passe par ledit point (0) de l'axe de détection (X), ce point étant sur lesdits moyens de réflexion (16),
et en ce que ces moyens de réflexion sont prévus pour défléchir à 90° un faisceau lumineux tombant sur eux suivant l'axe de rotation.

5. Dispositif selon la revendication 4, caractérisé en ce que les moyens de rotation des moyens de réflexion (16) comprennent un moteur électrique (12) ayant un arbre (14) dont une extrémité est biseautée à 45° et optiquement réflectrice, de manière à constituer lesdits moyens de réflexion.

6. Dispositif selon l'une quelconque des revendications 1 à 5, caractérisé en ce que, le faisceau en rotation passant par une première position dans laquelle il se propage suivant une première direction vers les moyens de photodétection (8), et par une seconde position dans laquelle il se propage suivant une seconde direction opposée à la première, ce dispositif comprend en outre des moyens (22) d'arrêt de ce faisceau dans l'une des première et seconde positions.

7. Dispositif selon l'une quelconque des revendications 1 à 6, caractérisé en ce que la source de lumière comprend un laser (44).

8. Dispositif selon l'une quelconque des revendications 1 à 7, caractérisé en ce qu'il comprend en outre des moyens (57) de déplacement relatif de l'objet (P) par rapport à ce dispositif, suivant une direction (Y) perpendiculaire à l'axe de détection (X) et parallèle au plan de coupe.

9. Dispositif selon l'une quelconque des revendications 1 à 8, caractérisé en ce qu'il comprend en outre des moyens (58, 60) de déplacement relatif de l'objet (P) par rapport à ce dispositif, suivant une direction (Z) perpendiculaire au plan de coupe.

## Patentansprüche

1. Vorrichtung zur Ortung eines Objekts (P), enthaltend:
- eine Lichtquelle (44), die geeignet ist, einen schmalen Lichtstrahl auszusenden,
- Einrichtungen (12, 16, 18, 20) zur Verschiebung des schmalen Lichtstrahls, wobei diese Strahlverschiebungseinrichtungen umfassen:
- Einrichtungen (12, 16) zum Drehen des Lichtstrahls in einer Schnittebene des Objekts um einen Punkt (0) der in der Schnittebene enthaltenen Detektionsachse (X), wobei der Strahl durch diesen Punkt der Detektionsachse tritt, und
- wenigstens einen festen Spiegel (18, 20) zum Umlenken des sich drehenden Strahles, wobei der Spiegel die Schnittebene schneidet, außerhalb der Achse angeordnet ist und dazu gedacht ist, die Verschiebung des an ihm in der Schnittebene, schief zur Detektionsachse (X), reflektierten Strahles zu ermöglichen, und dazu, die Abtastung des Objekts durch den reflektierten Strahl in der Schnittebene zu ermöglichen,
- Einrichtungen (8) zur Lichtdetektion, die geeignet sind, das Licht nachzuweisen, das sich in Richtung der Detektionsachse ausbreitet und von einem Punkt des Objektes ausgeht, der in besagter Ebene liegt und einer bestimmten Position des Strahles, der das Objekt abtastet, entspricht, wobei diese Position umkehrbar eindeutig mit der Entfernung zwischen dem Objektpunkt und den Einrichtungen zur Detektion des Lichtes verknüpft ist und letztere geeignet sind, zum Zeitpunkt der Detektion ein Signal zu erzeugen.
- Einrichtungen (24) zur Verarbeitung des Signals, die es erlauben, den Objektpunkt mit Hilfe des Zeitpunktes zu orten.

2. Vorrichtung nach Anspruch 1, dadurch gekennzeichnet, daß der Spiegel (18, 20) die Verschiebung des reflektierten Strahles parallel zu einer festen Richtung der Schnittebene erlaubt, wobei diese Richtung einen von Null verschiedenen Winkel (a) mit der Detektionsachse (X) bildet und der Spiegel die Form eines parabolischen Zylinders hat, dessen Schnittlinie mit einer senkrechten, mit der Schnittebene zusammenfallenden Ebene eine Parabel ist, deren Brennpunkt mit besagtem Punkt der Detektionsachse zusammenfällt.

3. Vorrichtung nach Anspruch 2, dadurch gekennzeichnet, daß sie zwei solcher Umlenkspiegel (18, 20) in Form parabolischer Zylinder besitzt, wobei diese Umlenkspiegel symmetrisch zu der zur Schnittebene senkrechten Ebene, die die Detektionsachse (X) enthält, angeordnet sind, sodaß die Einrichtungen zur Lichtdetektion (8) nacheinander, im Verlauf einer vollständigen Umdrehung des Strahles um den Punkt (0) der Detektionsachse (X), zwei Signale erzeugen, die zwei Positionen des Strahls entsprechen, wobei die Positionen ein und demselben Objektpunkt (P) entsprechen, und dadurch, daß die Signalverarbeitungseinrichtungen (24) dazu bestimmt sind, diesen Punkt mit Hilfe der Zeit, die zwischen den Detektionszeitpunkten der beiden Signale verflossen ist, zu orten.

4. Vorrichtung nach einem der Ansprüche 1 bis 3, dadurch gekennzeichnet, daß die Einrichtungen zur Strahldrehung enthalten:
- Einrichtungen der optischen Reflexion (16), und
- Einrichtungen (12) zur Drehung dieser Reflexionseinrichtungen um eine Drehachse (Z), die senkrecht zur Schnittebene ist und die durch besagten Punkt (0) der Detektionsachse (X) geht, wobei dieser Punkt auf besagten Reflexionseinrichtungen (16) liegt,
und dadurch, daß die Reflexionseinrichtungen dazu vorgesehen sind, einen Lichtstrahl, der auf sie in Richtung der Rotationsachse einfällt, um 90° abzulenken.

5. Vorrichtung nach Anspruch 4, dadurch gekennzeichnet, daß die Einrichtungen zur Drehung der Reflexionseinrichtungen (16) einen Elektomotor (12) mit einer Welle (14) enthalten, deren eines Ende auf 45° abgeschrägt und lichtreflektierend ist, so daß besagte Reflexionseinrichtungen gebildet werden.

6. Vorrichtung nach einem der Ansprüche 1 bis 5, dadurch gekennzeichnet, daß, da ja der sich drehende Strahl durch eine erste Position tritt, in der er sich in einer ersten Richtung zu den Lichtdetektionseinrichtungen (8) bewegt, und durch eine zweite Position, in der er sich in einer zweiten, zur ersten entgegengesetzten Richtung bewegt, diese Vorrichtung darüber hinaus Einrichtungen (22) zur Unterbrechung des Strahls in der ersten oder in der zweiten Position enthält.

7. Vorrichtung nach einem der Ansprüche 1 bis 6, dadurch gekennzeichnet, daß die Lichtquelle einen Laser (44) enthält.

8. Vorrichtung nach einem der Ansprüche 1 bis 7, dadurch gekennzeichnet, daß sie darüber hinaus Einrichtungen (57) zur Relativverschiebung des Objekts (P) gegenüber der Vorrichtung enthält, in Richtung (Y) senkrecht zur Detektionsachse und parallel zur Schnittebene.

9. Vorrichtung nach einem der Ansprüche 1 bis 8, dadurch gekennzeichnet, daß sie darüber hinaus Einrichtungen (58, 60) zur Relativverschiebung des Objekts (P) gegenüber der Vorrichtung enthält, in zur Schnittebene senkrechter Richtung (Z).

## Claims

1. Device for mapping an object (P) comprising:
- a source of light (44) capable of emitting a narrow light beam,
- means (12, 16, 18, 20) for displacing this narrow beam, such means for displacing the beam consisting of:
. means (12, 16) for rotating the light beam in a cutting plane of the object about a point (0) on a detection axis (X) contained in the cutting plane, the beam passing through this point on the detection axis, and
. at least one fixed mirror (18, 20) for reflecting the rotating beam, this mirror meeting the cutting plane and being situated off the axis and provided in order to allow the displacement of the beam reflected by it in the cutting plane, obliquely with respect to the detection axis (X), and in order to allow the scanning of the object by this reflected beam in the cutting plane,
- means (8) of photodetection capable of detecting light being propagated along the detection axis and emerging from a point on the object, situated in the said plane and corresponding to a predetermined position of the beam scanning the object, this position having a one-to-one relation with the distance between the point on the object and the means of photodetection, the latter being capable of creating a signal at the instant of detection, and
- means (24) for processing this signal, enabling the point on the object to be mapped with the help of this instant.

2. Device according to Claim 1, characterised in that the mirror (18, 20) enables the reflected beam to be displaced in a direction parallel to a fixed direction of the cutting plane, this direction making a non-zero angle (a) with the detection axis (X), the mirror being in the shape of a parabolic cylinder whose cross-section, through a plane coincident with the cutting plane, is a parabola whose focus is coincident with the said point on the detection axis.

3. Device according to Claim 2, characterised in that it comprises two such reflecting mirrors (18, 20) in the shape of parabolic cylinders, these reflecting mirrors being symmetrical to each other with respect to a plane which is perpendicular to the cutting plane and which contains the detection axis (X), so that the means of photodetection (8) create in succession, during the same complete rotation of the beam about the point (0) on the detection axis (X), two signals associated respectively with two positions of this beam, these positions corresponding to the same point on the object (P), and in that the means of processing (24) are provided in order to map this same point using the time that passes between the instants at which the two signals are detected.

4. Device according to any one of Claims 1 to 4, characterised in that the means for rotating the beam comprise:
- means of optical reflection (16), and
- means (12) of rotating these means of reflection about a rotation axis (Z) which is perpendicular to the cutting plane and which passes through the said point (0) on the detection axis (X), this point being on the said means of reflection (16),
and in that these means of reflection are provided in order to deflect through 90° a light beam falling on them along the rotation axis.

5. Device according to Claim 4, characterised in that the means for rotating the means of reflection (16) comprise an electric motor (12) having a shaft (14) one end of which is bevelled at 45° and optically reflecting, so as to constitute the said means of reflection.

6. Device according to any one of Claims 1 to 5, characterised in that, with the rotating beam passing through a first position in which it is propagated along a first direction towards the means of photodetection (8), and through a second position in which it is propagated along a second direction opposite to the first, this device also comprises means (22) for interrupting this beam in one of the first and second positions.

7. Device according to any one of Claims 1 to 6, characterised in that the source of light consists of a laser (44).

8. Device according to any one of Claims 1 to 7, characterised in that it also comprises means (57) for the relative displacement of the object (P) with respect to this device, along a direction (Y) perpendicular to the detection axis (X) and parallel to the cutting plane.

9. Device according to any one of Claims 1 to 8, characterised in that it also comprises means (58, 60) for the relative displacement of the object (P) with respect to this device, along a direction (Z) perpendicular to the cutting plane.
